# EUROPEAN PATENT SPECIFICATION

(11) **EP 1 219 167 B1**
(45) Date of publication and mention of the grant of the patent: **17.06.2009**
(21) Application number: 02075596.3
(22) Date of filing: 08.04.1997
(51) Int. Cl.: A01J 7/04, A01J 5/017, A01J 5/08

(54) **A machine for milking animals, such as cows**
Vorrichtung zum Melken von Tieren, so wie Kühen
Machine pour la traite d'animaux, tels que des vaches

(30) Priority: 17.04.1996 EP 96201026
(43) Date of publication of application: 03.07.2002
(62) Divisional of application: 97201047.4
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 277 396
- EP-A- 0 534 564
- DE-A- 2 622 794
- US-A- 5 275 124

## Description

The present invention relates to a machine for milking animals, such as cows, said machine comprising one or more teat cups capable of being connected to the teats of the animals. One such machine is known from EP.A.0 277396, disclosing the use of a four-way valve with a first part for the discharge of cleansing liquid, a second part for discharge of milk and a third for bleeding the teat cup. Foremilk, if any, and milk are discharged via the same port.

In the lower part of the teat space of the lower cup portion there will be collected fluid, i.e. a cleaning fluid, foremilk or milk. For the purpose of discharging the fluid collected, there is provided a line debouching into the lower part of the teat space of the lower cup portion, in which line there is included a four-way valve by means of which the cleaning fluid, foremilk and milk, collected consecutively in the teat space, is discharged separately. Therefore, the invention relates to a machine for milking animals, such as cows, said machine comprising one or more teat cups capable of being connected to the teats of the animals, which machine is then characterized in that there is provided a discharge line debouching into the teat space of the teat cup, in which line there is included a four-way valve by means of which the cleaning fluid, foremilk and milk, collected consecutively in the teat space, can be discharged separately.

In a first embodiment of the machine, the upper cup portion comprises an inner wall which is provided near its top end with apertures via which the cleaning fluid can be sprayed or spouted against the teat. These apertures may be orientated obliquely upwards in the direction of the open end of the cup, while they may further be provided around as well as over a length corresponding approximately to the distance over which the upper cup portion and the lower one can be spaced apart from each other. In this manner the entire surface of the teat, then located in the upper cup portion, can be cleaned. In this first embodiment, between the inner and the outer wall of the upper teat cup portion, there may be provided a space into which a cleaning fluid supply line debouches.

In a second embodiment of the machine, in the teat space of the teat cup there is provided a channel extending from the lower portion of the teat cup substantially in the direction of the open end thereof, via which channel the cleaning fluid can be sprayed or spouted against the teat to which the teat cup is connected.

In a machine as described thus far there will usually be provided four teat cups as described above, while, however, the two teat cups intended for the foremost teats may differ in length from the two teat cups intended for the rearmost teats. This may be of great advantage, as in many cases the rearmost teats are in a lower position than the foremost ones. In particular, the latter teat cups may be produced as shorter ones than the teat cups intended for the foremost teats.

The machine as described thus far may be provided with a milking robot for automatically connecting the teat cups to the teats of an animal to be milked and, after automatically milking the animal, automatically disconnecting the teat cups from the teats. In such a fully automated milking system the milking robot preferably comprises a robot arm construction capable of serving as a carrier for the teat cups and to which the teat cups, when they are connected to the teats, are only joined by means of a flexible element, such as a cable or a wire. Due to this the animal to be milked, after the teat cups have been connected, will be able to move freely, at least will not be hindered by the robot arm construction. As soon as the milk stream from an udder quarter to which a teat cup is connected has come below a specific level, said teat cup can be disconnected independently of the other teat cups and be pulled against the robot arm construction by means of the aforementioned flexible element and a pulling member connected therewith. In that case it is advantageous when the teat cup has a conically extending bottom part so as to be able to be pulled against the robot arm construction into a recess having a corresponding shape.

For a better understanding of the invention, reference will now be made to the accompanying drawings, in which:
Figure 1 shows schematically a milk box including a milking robot arranged therein;
Figure 2 is a partial cross-section of part of a teat cup in an appropriate position for cleaning a teat;
Figure 3 is a partial cross-section taken on the line III-III in Figure 2;
Figure 4 is a cross-section of the teat cup in accordance with a first embodiment of the invention in an appropriate position for milking, and
Figure 5 is a cross-section of the teat cup in a second embodiment in accordance with the invention.

In both embodiments, corresponding parts in the drawings have been indicated by the same reference numerals.

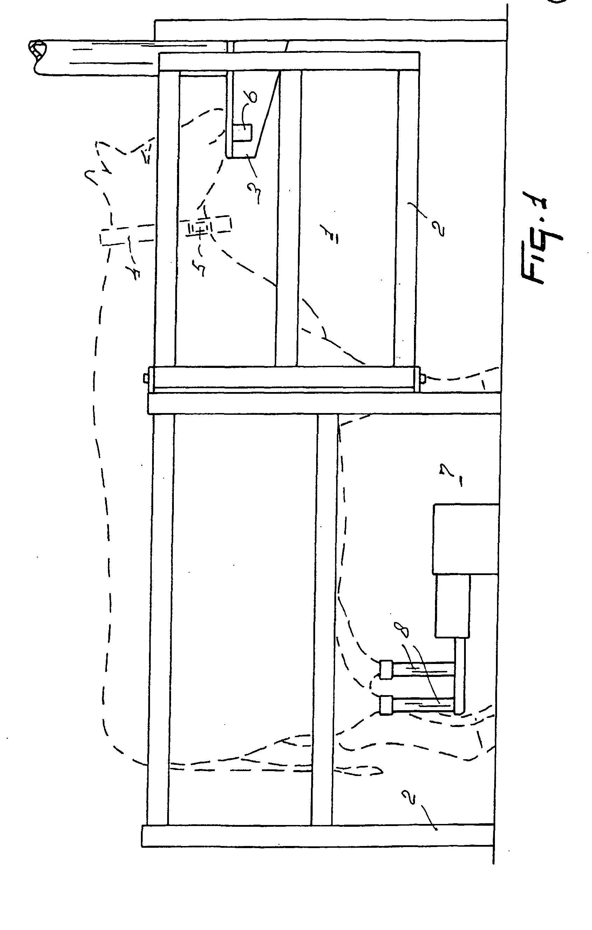

Figure 1 shows a milk box 1 in which an animal to be milked is indicated by broken lines. The milk box 1 is confined by a railing 2, in the longitudinal side(s) of which there are provided an entrance door and an exit door. At the front side of the milk box 1 a feed trough 3 is fastened to the railing 2, which feed trough constitutes part of a (non-shown) automatic feeding system. An animal entering the milk box 1 is identified there by means of an animal identification system known per se composed of a collar 4 worn by the animal, including a transponder 5 cooperating with a sensor 6 disposed near the feed trough; which sensor 6 is connected with a (non-shown) computer system. The implement is further provided with a milking robot 7 for automatically cleaning the teats of an animal to be milked, automatically connecting teat cups 8 to the teats of the animal, automatically milking the animal and automatically disconnecting the teat cups 8 from the teats. Such a milking robot has been known for a considerable time already in all kinds of embodiments. For automatically connecting the teat cups to the teats of an animal to be milked it is necessary to know the position of the teats of the animal. Although it is possible to use historical data regarding the teat position, in particular when the animal is accurately positioned in the milk box or when the position of the animal in the milk box is known, besides, or even instead, there may be used one or more detectors specifically provided for the purpose.

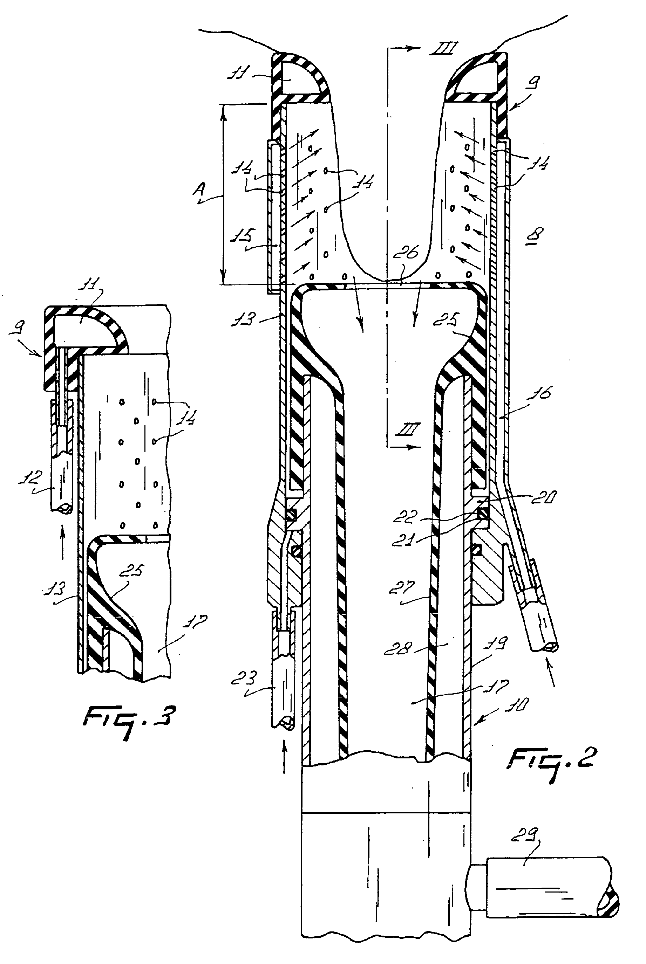

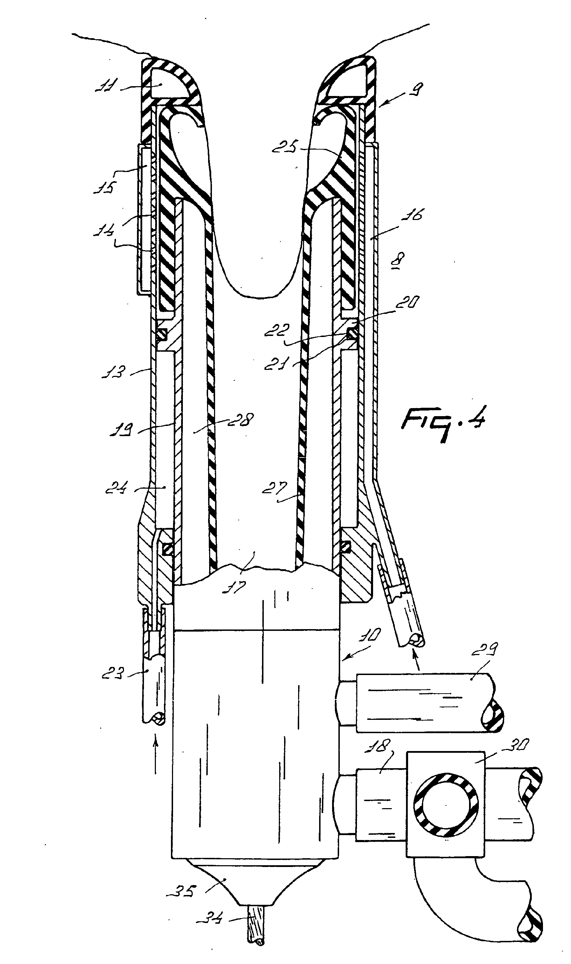

Although, prior to milking the animal, the teats have to be cleaned and, to that end, there will usually be provided separate cleaning means, in accordance with the present embodiment, the cleaning system for the teats is integrated into the teat cups themselves. For that purpose the teat cup 8 shown in Figures 2 to 4 comprises an upper cup portion 9 including cleaning means and a lower portion 10 which is movable in said upper portion in the longitudinal direction thereof. The upper cup portion 9 is provided with a hollow flexible edge 11 with the aid of which, by supplying compressed air, the teat cup is connected to a teat during cleaning of the latter. To that end the hollow space of the flexible edge 11 is connected to a first compressed air supply line 12 which, as shown in Figure 3, is disposed in the longitudinal direction at the outside of the upper cup portion 9. By pressing air via this compressed air supply line 12 into the hollow flexible edge 11, the upper portion will fit closely around the teat so as to prevent the teat cup from falling off from the teat. This way of connecting a teat cup to a teat is preferably not applied during the milking proper, as the pressure on the teat may hamper the outflow of the milk. However, regarding the cleaning of the teat there are no objections against this way of connecting the teat cup. During cleaning of the teat the lower cup portion 10 is lowered such that the teat inserted into the teat cup only occupies the upper cup portion 9. In order to be able to clean the teat, the inner wall 13 of the upper cup portion comprises apertures 14, which are preferably provided in said inner wall around the upper cup portion, in particular over a distance in longitudinal direction which approximately equals the distance A over which the two cup portions can be spaced apart from each other. At the top side of the upper cup portion 9 there is provided a space 15, into which a cleaning fluid supply line 16 debouches, which is disposed in the longitudinal direction of the teat cup. The apertures 14 in the inner wall of said space 15 of the upper cup portion 9 are orientated obliquely upwards, i.e. extend obliquely upwards in the direction of the open end of the teat cup, so that the cleaning fluid, which is supplied via the supply line 16 and is introduced into the space 15 around the teat cup, is sprayed or spouted via the apertures 14 on all sides in upward direction against the teat inserted into the teat cup. The cleaning fluid is discharged via the teat space 17 into the lower cup portion 10 and the discharge line 18 connected therewith. When after cleaning of the teat milking has to take place, the lower cup portion 10 is raised and shifted around the teat which is inserted into the teat cup. In the present embodiment, this is effected by means of compressed air. For that purpose the lower cup portion comprises a tube-like body 19 provided with a projecting edge 20, which is movable along the inside of the wall of the upper cup portion 9 so as to fit therein. In this projecting edge 20 there is provided a recess 21 for a sealing ring 22 in order to realize a desired sealing between the two cup portions. Along the outside of the teat cup and rigidly connected with the upper cup portion 9 there is provided a second compressed air supply line 23; the opening at the upper side of said compressed air supply line 23 debouches at the lower side of the projecting edge 20. As soon as there is supplied compressed air, under the influence thereof the lower cup portion 10 will be moved upwards and there will be created a compressed air space 24. The tube-like body 19 is provided with a flexible upper portion 25 which is arranged around the tube-like body 19 above the projecting edge 20 and which is provided at its top side with an opening 26 into which the teat can be inserted when the lower cup portion 10 is moved upwards in the upper cup portion 9. Said opening 26 is such that the flexible upper portion 25 will closely fit the teat inserted into the lower cup portion 10. In the present embodiment, the flexible upper portion 25 constitutes an integral whole with a lining 27 of the lower cup portion 10. Within said lining 27 the teat space 17 extends, in which teat space 17 the teat is located during milking, i.e. when the lower cup portion 10 is moved upwards within the upper cup portion 9 and the teat has been inserted therein. The space between the tube-like body 19 and the lining 27 constitutes a pulsation space 28. Although not further shown, said pulsation space 28 is connected via a pulsation line 29 with a pulsator usually applied in such milking installations. During milking the milk is collected in the teat space 17 and discharged via the discharge line 18. As this line also serves for discharging the cleaning fluid in the stage before the milking proper, there is included a valve 30 in the discharge line 18. As in Figure 4 said valve 30 is a four-way valve including a separate outlet for the cleaning fluid, the foremilk and, of course, the milk itself.

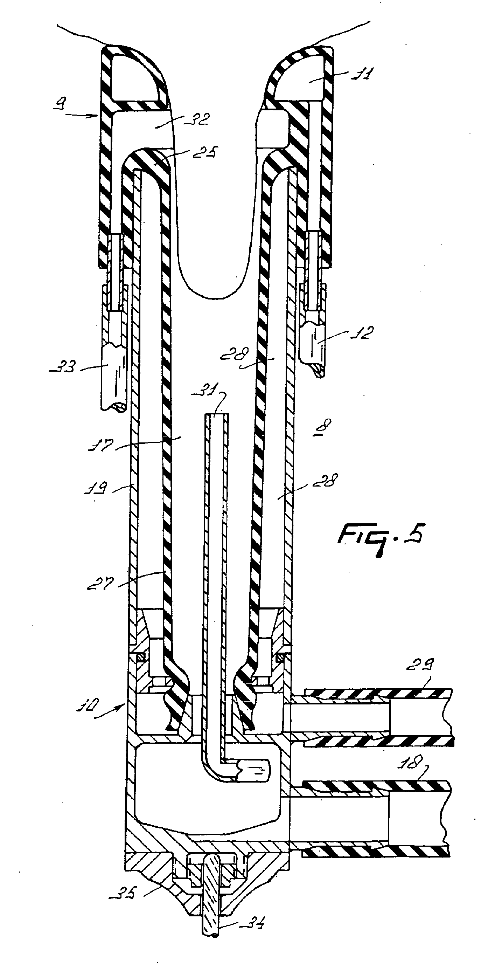

In the second embodiment of the teat cup in accordance with the invention, which embodiment is shown in Figure 5, the teat cup does not comprise two cup portions which are movable relative to each other. In this embodiment, upon connecting the teat cup, the teat is inserted into the teat space 17, via which the milk yielded is discharged and the cleaning fluid is supplied. Also in this case there is provided a flexible upper portion 25 on the tube-like body 19, constituting the wall of the teat cup, which upper portion constitutes an integral whole with both the hollow flexible edge 11 and the lining 27 or is rigidly connected thereto. Like in the first embodiment, also in this second embodiment the cup is kept connected to the teat during cleaning of the latter by supplying compressed air via the line 12 to the hollow space in the flexible edge 11. After the teat has been cleaned, this pressure is removed and the teat cup is kept connected to the teat by means of the thus created underpressure in the teat space 17. Then the teat is fittingly surrounded by that part of the flexible upper portion 25 which is immediately adjacent to the upper edge of the tube-like body 19. There is provided a channel 31 extending from the lower side of the teat cup to the open end thereof, which channel 31 is connected at the lower side of the cleaning cup to a (non-shown) cleaning fluid supply line. Said channel 31 extends at its upper side in the teat cup to such an extent, that the fluid spouted out of the channel 31 can be sprayed or spouted upwards or obliquely upwards against the teat inserted into the teat cup. When the cleaning fluid is spouted against the teat via the channel 31, the teat space 17 will be filled first, while it is noticed that in that case the discharge line connected to the teat space 17 is provided with a valve, which is closed during cleaning. The further cleaning fluid supplied via the channel 31 will subsequently be pressed upwards along the teat through the enclosure of the part of the flexible upper portion 25 adjacent to the tube-like body 19, in a space 32 between said flexible upper portion 25 adjacent to the tube-like body 19 and the lower side of the hollow flexible edge 11, and subsequently be discharged from said space 32 via a cleaning fluid discharge line 33. By also including in this case a four-way valve 30, in the line 18, it will be possible, after cleaning, to discharge separately the cleaning fluid remaining behind in the teat space 17, while it will also be possible in this case to discharge, the foremilk and, of course, the milk itself via other lines connected to said valve.

As already mentioned before, the here described teat cups may be arranged in a milking robot 7, in particular on or against a robot arm construction carrying the teat cups. By means of a flexible element, such as a cable or wire 34, the teat cups are capable of being pulled against the robot arm construction. To that end the robot arm construction comprises a pulling member, e.g. a control cylinder. As soon as the milk stream from an udder quarter to which the teat cup is connected has come below a specific level, the teat cup will be disconnected by removing the vacuum therein, whereafter the pulling member is activated so that the teat cup will be pulled against the robot arm construction. In order to achieve that the teat cup is pulled each time into the same position on the robot arm, the teat cup has a conically extending bottom part 35 fitting into a recess having a corresponding shape, which is provided in the robot arm construction. The robot arm construction will in principle carry four teat cups. It may be desirable to make the two teat cups intended for the foremost teats differ in length from the two teat cups intended for the rearmost teats, in such a way that, because the rearmost teats of an animal to be milked are usually positioned lower, the teat cups for the rearmost teats are produced as shorter ones.

## Claims

1. A machine for milking animals, such as cows, said machine comprising one or more teat cups (8) capable of being connected to the teats of the animals, a discharge line (18) debouching into the teat space (17) of the teat cup (8), in which discharge line (18) there is included a four-way valve (30) for the purpose of discharging cleaning fluid, foremilk and milk, **characterized in that** said four-way valve includes a separate outlet for the cleaning fluid, the foremilk and the milk, so that cleaning fluid, foremilk and milk, collected consecutively in the teat space (17), can be discharged separately.

2. A machine as claimed in claim 1, **characterized in that** the upper cup portion (9) comprises an inner wall (13) which is provided near its top end with apertures (14) via which the cleaning fluid can be sprayed or spouted against the teat.

3. A machine as claimed in claim 2, **characterized in that** the apertures (14) are orientated obliquely upwards in the direction of the open end of the teat cup (8).

4. A machine as claimed in claim 2 or 3, **characterized in that** the apertures (14) are provided around as well as over a length corresponding approximately to the distance over which the upper cup portion (9) and the lower one (10) can be spaced apart from each other.

5. A machine as claimed in claim 2, 3 or 4, **characterized in that**, between the inner and the outer wall of the upper teat cup potion. (9), there is provided a space (15) into which a cleaning fluid supply line (16) debouches.

6. A machine as claimed in any one of the preceding claims, **characterized in that** there are provided four teat cups (8), while the two teat cups (8) intended for the foremost teats differ in length from the two teat cups (8) intended for the rearmost teats.

7. A machine as claimed in any one of the preceding claims, **characterized in that** said machine is provided with a milking robot (7) for automatically connecting the teat cups (8) to the teats of an animal to be milked and, after automatically milking the animal, automatically disconnecting the teat cups (8) from the teats.

8. A machine as claimed in claim 7, **characterized in that** the milking robot (7) comprises a robot arm construction capable of serving as a carrier for the teat cups (8) and to which the teat cups (8), when they are connected to the teats, are only joined by means of a flexible element, such as a cable or wire (34).

9. A machine as claimed in claim 8, **characterized in that**, as soon as the milk stream from the udder quarter to which a teat cup (8) is connected has come below a specific level, said teat cup (8) will be disconnected and be pulled against the robot arm construction by means of said flexible element and a pulling member connected therewith.

10. A machine as claimed in claim 9, **characterized in that** the teat cup (8) has a conically extending bottom part (35) and can be pulled against the robot arm construction into a recess (21) having a corresponding shape.

## Patentansprüche

1. Vorrichtung zum Melken von Tieren, wie z. B. Kühen, wobei die Vorrichtung einen oder mehrere Zitzenbecher (8), welche sich mit den Zitzen der Tiere verbinden lassen, und eine Auslassleitung (18) umfasst, welche in den Zitzenraum (17) des Zitzenbechers (8) hinein mündet, wobei in dieser Auslassleitung (18) ein Vier-Weg-Ventil (30) zum Zwecke des Ableitens von Reinigungsfluid, Vormilch und Milch bereit gestellt ist,
**dadurch gekennzeichnet, dass** das Vier-Weg-Ventil einen getrennten Auslass für das Reinigungsfluid, die Vormilch und die Milch umfasst, so dass Reinigungsfluid, Vormilch und Milch, welche aufeinanderfolgend im Zitzenraum (17) gesammelt werden, getrennt abgeführt werden können.

2. Vorrichtung nach Anspruch 1,
**dadurch gekennzeichnet, dass** der obere Becherabschnitt (9) eine innere Wand (13) umfasst, welche nahe ihrem oberen Ende mit Öffnungen (14) ausgestattet ist, durch die das Reinigungsfluid gegen die Zitze gesprüht oder gespritzt werden kann.

3. Vorrichtung nach Anspruch 2,
**dadurch gekennzeichnet, dass** die Öffnungen (14) schräg nach oben in die Richtung des offenen Endes des Zitzenbechers (8) ausgerichtet sind.

4. Vorrichtung nach Anspruch 2 oder 3,
**dadurch gekennzeichnet, dass** die Öffnungen (14) im Umfang und über eine Länge vorgesehen sind, welche ungefähr dem Abstand entspricht, über welchen der obere Becherabschnitt (9) und der untere (10) voneinander beabstandet sein können.

5. Vorrichtung nach Anspruch 2, 3 oder 4,
**dadurch gekennzeichnet, dass** zwischen der inneren und der äußeren Wand des oberen Zitzenbecherabschnitts (9) ein Raum (15) vorgesehen ist, in welchen eine Reinigungsfluidversorgungsleitung (16) mündet.

6. Vorrichtung nach einem der vorhergehenden Ansprüche,
**dadurch gekennzeichnet, dass** vier Zitzenbecher (8) vorgesehen sind, wobei die zwei Zitzenbecher (8), welche für die vordersten Zitzen vorgesehen sind, sich in ihrer Länge von den zwei Zitzenbechern (8) unterscheiden, welche für die hinteren Zitzen vorgesehen sind.

7. Vorrichtung nach einem der vorhergehenden Ansprüche,
**dadurch gekennzeichnet, dass** die Vorrichtung mit einem Melkroboter (7) zum automatischen Verbinden der Zitzenbecher (8) mit den Zitzen eines zu melkenden Tieres und nach dem Melken des Tieres zum automatischen Trennen der Zitzenbecher (8) von den Zitzen ausgestattet ist.

8. Vorrichtung nach Anspruch 7,
**dadurch gekennzeichnet, dass** der Melkroboter (7) einen Roboterarmaufbau umfasst, welcher in der Lage ist, als ein Träger für die Zitzenbecher (8) zu dienen, und mit dem die Zitzenbecher (8), wenn sie mit den Zitzen ver bunden sind, nur mittels eines flexiblen Elements wie einem Kabel oder Draht (34) verbunden sind.

9. Vorrichtung nach Anspruch 8,
**dadurch gekennzeichnet, dass**, sobald der Milchstrom vom Euterviertel, mit welchem ein Zitzenbecher (8) verbunden ist, unter ein bestimmtes Niveau abfällt, der Zitzenbecher (8) abgetrennt und gegen den Roboterarmaufbau mittels des biegsamen Elements und eines damit verbundenen Zugelements gezogen wird.

10. Vorrichtung nach Anspruch 9,
**dadurch gekennzeichnet, dass** der Zitzenbecher (8) einen sich konisch erstreckenden Bodenteil (35) aufweist und gegen den Roboterarmaufbau in eine Vertiefung (21), welche eine entsprechende Form besitzt, gezogen werden kann.

## Revendications

1. Machine pour la traite d'animaux, tels que des vaches, ladite machine comprenant un ou plusieurs gobelets trayeurs (8) pouvant être reliés aux trayons des animaux, une ligne d'évacuation (18) débouchant dans l'espace du trayon (17) du gobelet trayeur (8), ligne d'évacuation (18) comprenant un robinet à quatre voies (30) ayant pour objet d'évacuer le liquide de nettoyage, le premier lait et le lait, **caractérisée en ce que** ledit robinet à quatre voies comprend une sortie séparée pour le liquide de nettoyage, le premier lait et le lait, de telle sorte que le liquide de nettoyage, le premier lait et le lait, recueillis consécutivement dans l'espace du trayon (17), puissent être évacués séparément.

2. Machine selon la revendication 1, **caractérisée en ce que** la partie de gobelet supérieure (9) comprend une paroi intérieure (13) dotée près de son extrémité supérieure d'ouvertures (14) par l'intermédiaire desquelles le liquide de nettoyage peut être pulvérisé ou versé contre le trayon.

3. Machine selon la revendication 2, **caractérisée en ce que** les ouvertures (14) sont orientées de façon oblique vers le haut dans la direction de l'extrémité ouverte du gobelet trayeur (8).

4. Machine selon la revendication 2 ou 3,
**caractérisée en ce que** les ouvertures (14) sont disposées autour ainsi que sur une longueur correspondant approximativement à la distance sur laquelle la partie de gobelet supérieure (9) et la partie inférieure (10) peuvent être espacées l'une de l'autre.

5. Machine selon la revendication 2, 3 ou 4, **caractérisée en ce que**, entre la paroi interne et la paroi externe de la partie de gobelet trayeur supérieure (9), se trouve un espace (15) dans lequel une ligne d'alimentation de liquide de nettoyage (16) débouche.

6. Machine selon l'une quelconque des revendications précédentes, **caractérisée en ce qu'**elle comprend quatre gobelets trayeurs (8), les deux gobelets trayeurs (8) destinés aux trayons situés les plus à l'avant différant en longueur des deux gobelets trayeurs (8) destinés aux trayons situés les plus à l'arrière.

7. Machine selon l'une quelconque des revendications précédentes, **caractérisée en ce que** ladite machine est dotée d'un robot de traite (7) pour raccorder automatiquement les gobelets trayeurs (8) aux trayons d'un animal devant être trait et, après avoir trait automatiquement l'animal, séparer automatiquement les gobelets trayeurs (8) des pis.

8. Machine selon la revendication 7, **caractérisée en ce que** le robot de traite (7) comprend une construction de bras de robot capable de servir de support pour les gobelets trayeurs (8) et à laquelle les gobelets trayeurs (8), quand ils sont raccordés aux trayons, sont seulement joints au moyen d'un élément flexible, tel qu'un câble ou un fil (34).

9. Machine selon la revendication 8, **caractérisée en ce que**, dès que le flux de lait de la partie de pis à laquelle un gobelet trayeur (8) est raccordé est descendue en dessous d'un niveau spécifique, ledit gobelet trayeur (8) est détaché et tiré contre la construction de bras de robot au moyen dudit élément flexible et un élément de traction relié à celle-ci.

10. Machine selon la revendication 9, **caractérisée en ce que** le gobelet trayeur (8) comprend une partie inférieure s'étendant de façon conique (35) et peut être tiré contre la construction de bras de robot dans un encastrement (21) ayant une forme correspondante.
